# EUROPEAN PATENT SPECIFICATION

(11) **EP 3 503 486 B1**
(45) Date of publication and mention of the grant of the patent: **29.07.2020**
(21) Application number: 18190200.8
(22) Date of filing: 22.08.2018
(51) Int. Cl.: H04L 25/02, H04L 27/26

(54) **CHANNEL ESTIMATION CIRCUIT AND CHANNEL ESTIMATION METHOD THEREOF**
KANALSCHÄTZSCHALTUNG UND KANALSCHÄTZVERFAHREN DAFÜR
CIRCUIT D'ESTIMATION DE CANAL ET SON PROCÉDÉ D'ESTIMATION DE CANAL

(30) Priority: 22.12.2017 CN 201711401391; 19.03.2018 CN 201810226896
(43) Date of publication of application: 26.06.2019
(73) Proprietor: ALi Corporation, Hsinchu City 300 (TW)
(72) Inventor: YANG, Yong, Shanghai, 200233 (CN)
(74) Representative: Viering, Jentschura & Partner mbB Patent- und Rechtsanwälte

(56) References cited:
- US-A1- 2005 185 738
- US-A1- 2016 149 727
- JIAXIN YANG ET AL: "Optimal reliable data feedback selection based iterative decision-directed channel estimation for OFDM system", ELECTRICAL AND COMPUTER ENGINEERING (CCECE), 2011 24TH CANADIAN CONFERENCE ON, IEEE, 8 May 2011 (2011-05-08), pages 597-602, XP031967581, DOI: 10.1109/CCECE.2011.6030521 ISBN: 978-1-4244-9788-1
- ATAPATTU LAKMALI: "Novel channel tracking and equalization methods in MU-MIMO-OFDM systems", 2013 IEEE 14TH INTERNATIONAL SYMPOSIUM ON A WORLD OF WIRELESS, MOBILE AND MULTIMEDIA NETWORKS (WOWMOM), IEEE, 4 June 2013 (2013-06-04), pages 1-2, XP032478127, DOI: 10.1109/WOWMOM.2013.6583429 ISBN: 978-1-4673-5827-9 [retrieved on 2013-08-20]

## Description

### FIELD OF THE INVENTION

The present disclosure relates to a channel estimation circuit and a channel estimation method, and especially to a channel estimation circuit and a channel estimation method for a wireless communication system.

### BACKGROUND OF THE INVENTION

In an existing channel estimation method, an orthogonal frequency-division multiplexing (OFDM) system signal to be transmitted is generally divided into sub-signals and inserted with pilot signals at a transmitting end, and the OFDM signal with pilot signals is then transmitted to a receiving end via a communication channel. Data of the pilot signals are known to the receiving end. Therefore, at the receiving end, channel responses may be obtained according to the pilot signals within the received OFDM signal, and then time domain filtering and frequency domain filtering are successively performed on the OFDM signal, and finally a comprehensive channel estimation value is obtained thereby. For example, in a Wi-Fi system using the OFDM technology, long training field (LTF) symbols are sent from the transmitting end to the receiving end, and a channel estimation value is calculated at the receiving end by information from the LTF symbols to represent the channel status of the entire signal transmission process.

However, the channel status may dynamically vary during the signal transmission process. Therefore, a channel estimation method is needed to track channel variation, and ensure accuracy of the channel estimation result, so as to improve the channel estimation precision for communication systems.

Some solutions to the above problem are known from prior art documents:
Jiaxin Yang et al: "Optimal reliable data feedback selection based iterative decision-directed channel estimation for OFDM system", 24th Canadian Conference on Electrical and Computer Engineering, 8 May 2011, pages 597-602; and
US 2005/185738 A1.

### SUMMARY OF THE INVENTION

The present disclosure provides a channel estimation circuit and a channel estimation method capable of tracking channel status variations, so as to increase the accuracy of the channel estimation for communication systems The invention is defined in the independent claims. Specific embodiments of the invention are set forth in the dependent claims.

In the channel estimation circuit and the channel estimation method of the present disclosure, the channel estimation value may be used to help the next input signal to recover a corresponding transmission signal, so that the channel estimation can be performed again. In this way, the accuracy of the channel estimation for wireless communication systems can be improved by continuously updating the channel estimation value to track the channel status variations.

To further understand the techniques, means and effects of the present disclosure, the following detailed descriptions and appended drawings are hereby referred to, such that, and through which, the purposes, features and aspects of the present disclosure can be thoroughly and concretely appreciated. However, the appended drawings are provided solely for reference and illustration, without any intention to limit the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a block diagram of a channel estimation circuit according to an embodiment of the present disclosure;
FIG. 2 is a block diagram of a channel estimator in the channel estimation circuit according to another embodiment of the present disclosure;
FIG. 3A is a block diagram of a signal recovery circuit in the channel estimation circuit according to an embodiment of the present disclosure;
FIG. 3B is a block diagram of the signal recovery circuit in the channel estimation circuit according to another embodiment of the present disclosure;
FIG. 4 is a flowchart of a channel estimation method according to an embodiment of the present disclosure;
FIG. 5 is a flowchart illustrating in detail step 402 in FIG. 4;
FIG. 6 is a flowchart illustrating in detail steps S503 to S504 in FIG. 5; and
FIG. 7 is a schematic view of a data unit format according to an embodiment of the present disclosure.

### DETAILED DESCRIPTION OF THE PREFERRED EMBODIMENTS

Embodiments of a channel estimation method and a channel estimation circuit according to the present disclosure are described herein. Other advantages and objectives of the present disclosure can be easily understood by one skilled in the art from the disclosure. The present disclosure can be applied in different embodiments. Various modifications and variations can be made to various details in the description for different applications without departing from the scope of the present disclosure. The drawings of the present disclosure are provided only for simple illustrations, but are not drawn to scale and do not reflect the actual relative dimensions. The following embodiments are provided to describe in detail the concept of the present disclosure, and are not intended to limit the scope thereof in any way.

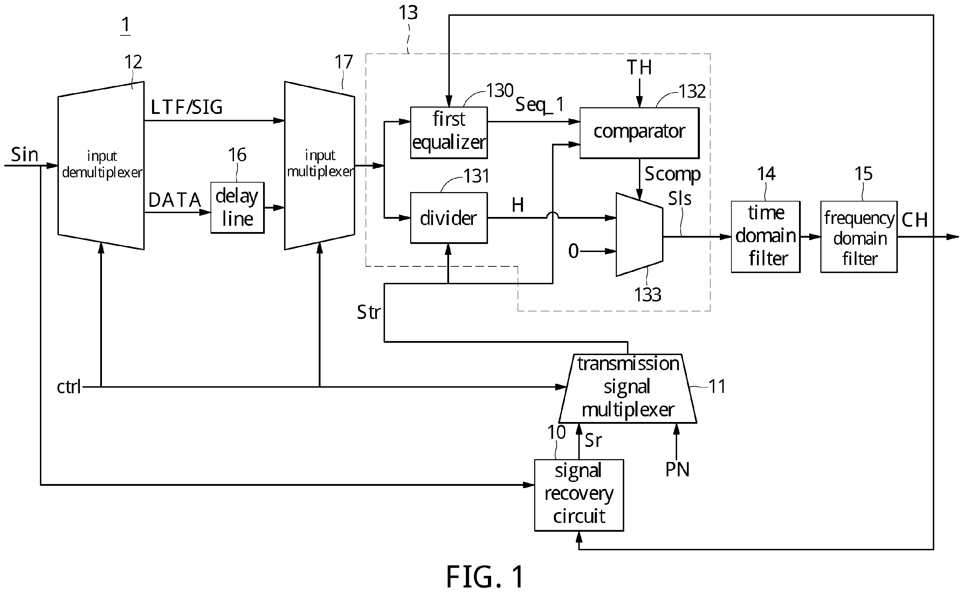

Reference is made to FIG. 1, which is a block diagram of a channel estimation circuit 1 according to an embodiment of the present disclosure. The channel estimation circuit 1 may be arranged in a wireless communication system using OFDM technology, such as a Wi-Fi communication device. When the communication device receives a signal from another wireless communication device, the channel estimation circuit 1 performs channel estimation. As shown in FIG. 1, the channel estimation circuit 1 includes a signal recovery circuit 10, a channel estimator 13, a time domain filter 14, and a frequency domain filter 15. The signal recovery circuit 10 receives an input signal Sin and generates a recovery signal Sr as a transmission signal corresponding to the received input signal Sin. The channel estimator 13 coupled to the signal recovery circuit 10 outputs an estimation signal Sls. The time domain filter 14 coupled to the channel estimator 13 filters the estimation signal Sls in time domain. The frequency domain filter 15 coupled to the time domain filter 14 performs frequency domain filtering on the estimation signal Sls filtered by the time domain filter 14, so as to generate a channel estimation result CH. The time domain filter 14 and the frequency domain filter 15 may be, for example, a finite impulse response (FIR) filter and an infinite impulse response (IIR) filter, respectively.

In the embodiment, the channel estimator 13 further includes a first equalizer 130, a divider 131, a comparator 132 and an output circuit 133. The first equalizer 130 receives the input signal Sin and is used to generate a first equalization signal Seq_1. The divider 131 receives the input signal Sin and the transmission signal, and performs division to generate a division signal H. The comparator 132 receives the first equalization signal Seq_1 and the transmission signal to calculate a difference between the first equalization signal Seq_1 and the transmission signal. The comparator 132 compares the difference with a threshold value TH to output a comparison result Scomp. The output circuit 133 receives the division signal H and the comparison result Scomp, and outputs the estimation signal Sls according to the comparison result Scomp. When the comparison result Scomp shows that the difference is greater than or equal to the threshold value TH, the output circuit 133 outputs zero as the estimation signal Sls, and when the comparison result Scomp shows that the difference is smaller than the threshold value TH, the output circuit 133 outputs the division signal H from the divider 131 as the estimation signal Sls. In the embodiment, the channel estimator 13 may be represented as an improved least square (LS) estimator circuit, and the output circuit 133 may, specifically, be a multiplexer or a switch.

The channel estimation result CH generated by the frequency domain filter 15 is further transmitted to the first equalizer 130 and the signal recovery circuit 10, so as to proceed with transmission signal recovery and channel estimation relating to the subsequent input signal Sin. The first equalizer 130, according to the channel estimation result CH obtained from the frequency domain filter 15, equalizes the received input signal Sin and therefore generates the first equalization signal Seq_1. The signal recovery circuit 10 recovers the transmission signal based on the received input signal Sin and the channel estimation result CH obtained from the frequency domain filter 15, and thus obtains the recovery signal Sr. Details on the recovery of the transmission signal by the signal recovery circuit 10 will be described later. In other words, when the signal recovery circuit 10, the first equalizer 130, or the divider 131 of the channel estimation circuit 1 receives an input signal Sin and an channel estimation result CH, the channel estimation result CH received by the signal recovery circuit 10 and the first equalizer 130 is transmitted from the frequency domain filter 15 and is corresponded to the channel estimation value calculated according to the previous input signal Sin. When the channel estimation result CH is updated based on the current input signal Sin, the updated channel estimation result CH will also be transmitted to the signal recovery circuit 10 and the first equalizer 130 in order to contribute to subsequent channel estimation associated with the next input signal Sin.

It should be noted that, the difference between the first equalization signal Seq_1 and the transmission signal being greater than or equal to the threshold value TH would indicate that the input signal Sin is significantly different from the transmission signal corresponding to the input signal Sin, which means the recovered transmission signal may be incorrect. Therefore, the division signal H calculated based on the input signal Sin and the incorrect transmission signal would not be outputted, and the output circuit 133 would output 0 as the value of the estimation signal Sls. In this way, the incorrect division signal H will not be involved in the following time domain filtering nor frequency domain filtering, so that generating incorrect channel estimation result CH can be avoided, and the following signal recovery based on the incorrect channel estimation result CH, can also be prevented. In the embodiment, the range of the difference is between 0 and 1. When the input signal Sin exactly matches the transmission signal Str, the difference is 0. And when the input signal Sin completely mismatches with the transmission signal Str, the difference is 1. Therefore, the threshold value TH may be set between 0 and 1, for example, 0.25, but the present disclosure is not limited thereto.

For example, in a Wi-Fi communication device, the received input signal Sin, according to the technology standards, may include preambles, signaling (SIG) symbols and data (DATA) symbols. The preamble at least includes long training field (LTF) symbols. According to technical standards, the transmission signal of the long training field symbol is known information to receiving device, and thus, it does not have to be recovered. Therefore, in the exemplary embodiment in FIG. 1, the channel estimation circuit 1 may further include: a transmission signal multiplexer 11, an input demultiplexer 12, a delay line 16, and an input multiplexer 17. The transmission signal multiplexer 11 coupled to the signal recovery circuit 10 receives the recovery signal Sr and a known sequence PN, and outputs one of the recovery signal Sr and the known sequence PN as the transmission signal Str. The known sequence PN is the known transmission signal of the long training field symbol. The input demultiplexer 12 receives the input signal Sin and transmits the input signal Sin to the delay line 16 or to the input multiplexer 17 according to the type of the input signal Sin. The delay line 16 delays the received input signal Sin and outputs the delayed input signal to the input multiplexer 17. The input multiplexer 17, according to the type of the input signal Sin, outputs the input signal Sin from one of the input demultiplexer 12 and the delay line 16 to the channel estimator 13. Specifically, when the input signal Sin is a long field training symbol LTF or a signal symbol SIG, the input demultiplexer 12 directly transmits the input signal Sin to the input multiplexer 17. The input signal Sin is then transmitted from the input multiplexer 17 to the channel estimator 13. When the input signal Sin is a data symbol DATA, the input demultiplexer 12 transmits the input signal Sin to the delay line 16, and then the delayed input signal Sin is transmitted from the input multiplexer 17 to the channel estimator 13 to match the time that the signal recovery circuit 10 takes to recover the data symbol DATA.

In the embodiment, the input signal Sin is one of a long training field symbol LTF, a signal symbol SIG, and a data symbol DATA. The transmission signal multiplexer 11, the input demultiplexer 12 and the input multiplexer 17 are used for choosing the transmission route according to the type of the input signal Sin (i.e., a long field training symbol LTF, a data symbol DATA, or a signal symbol SIG). The long field training symbol LTF does not require signal recovery calculation and the channel estimation may be directly performed to obtain the channel characteristics, while the signal symbol SIG and the data symbol DATA require to be processed by the signal recovery circuit 10 to recover the corresponding transmission signal and perform the channel estimation. For example, when the input signal Sin is a long training field symbol LTF or a signal symbol SIG, the transmission route chosen by the input demultiplexer 12 will transmit the input signal Sin directly from the input multiplexer 17 to the channel estimator 13. Meanwhile, when the input signal Sin is the long training field symbol LTF, the transmission signal multiplexer 11 chooses to output the known sequence PN as the transmission signal Str, and when the input signal Sin is the signal symbol SIG, the transmission signal multiplexer 11 chooses to output the recovery signal Sr as the transmission signal Str. In addition, when the input signal Sin is the data symbol DATA, in the transmission route chosen by the input demultiplexer 12, the input signal Sin is transmitted to the delay line 16 first, and then transmitted to the channel estimator 13 by the input multiplexer 17. At the same time, the transmission signal multiplexer 11 outputs the recovery signal Sr as the transmission signal Str. That is, according to the embodiment of the present disclosure, aside from performing channel estimation utilizing the long training field symbol LTF, the channel estimation circuit 1 performs channel estimation based further on the signal symbol SIG and the data symbol DATA for tracking the channel status variations. The configuration of the transmission signal multiplexer 11, the input demultiplexer 12 and the input multiplexer 17 in this embodiment is just one implementation of the present disclosure, and should not be taken as limitation in the present disclosure.

The signal recovery circuit 10 receives the input signal Sin transmitted via the channel, and receives the channel estimation result CH output by the frequency domain filter 15 for equalizing the input signal Sin to remove the influence of the channel. The signal recovery circuit 10 further decodes the equalized input signal Sin to retrieve information from the signal before encodes the retrieved information to generate the recovery signal Sr. The recovery signal Sr generated by the signal recovery circuit 10 is regarded as the replication of original transmission signal of the corresponded input signal Sin. The first equalizer 130 also receives the same input signal Sin transmitted via the channel, and the channel estimation result CH transmitted from the frequency domain filter 15 is used for equalizing the input signal Sin to generate the first equalization signal Seq_1. The first equalization signal Seq_1 is the result of removing the effect of channel interferences from the input signal. Therefore, when the comparator 132 compares the transmission signal Str (such as the recovery signal Sr) with the first equalization signal Seq_1 and the difference therebetween is greater than or equal to the threshold value TH, it indicates that an error may occurr as the signal recovery circuit 10 tries to recover the signal symbol SIG or the data symbol DATA, resulting in distinct difference between the transmission signal Str and the input signal Sin instead of being equivalent. In this case, the division signal H calculated based on the transmission signal Str by the divider 131 may not correctly represent the current channel characteristics. Therefore, the output circuit 133 will not choose the division signal H as the estimation signal Sls according to the comparison result Scomp of the comparator 132.

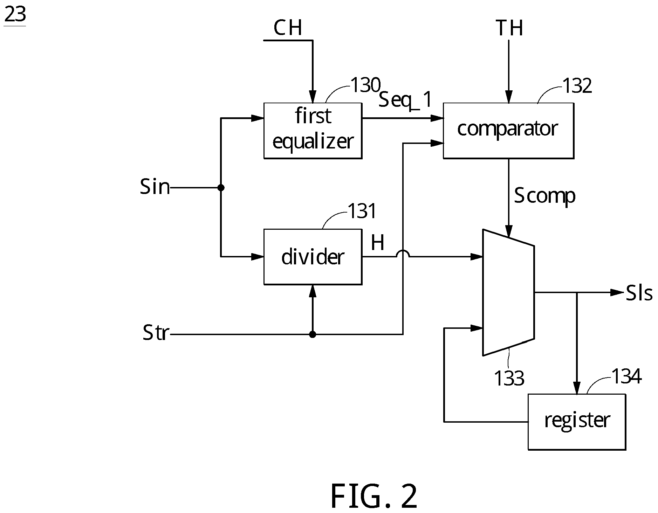

Reference is made to FIG. 2, which is a block diagram of a channel estimator 23 in the channel estimation circuit according to another embodiment of the present disclosure. As shown in FIG. 2, the channel estimator 23 differs from the channel estimator 13 in FIG. 1 in that the channel estimator 23 further includes a register 134. The register 134 is coupled to the output circuit 133 and stores the latest estimation signal Sls outputted from the output circuit 133. In the embodiment, when the difference is smaller than the threshold value TH, the output circuit 133 outputs the updated division signal H as the estimation signal Sls. The outputted estimation signal Sls is transmitted to the time domain filter and also stored in the register 134. However, if the comparison result Scomp shows that the difference is greater than or equal to the threshold value TH, the output circuit 133 retrieves and outputs the estimation signal Sls stored by the register 134. The difference being greater than or equal to the threshold value TH indicates that the transmission signal Str is incorrect, for example, the recovery signal Sr generated from the signal recovery circuit 10 is incorrect. Therefore, the division signal H from the divider 131 will not be chosen as the estimation signal Sls. At this time, the estimation signal Sls stored in the register 134 is chosen by the output circuit 133 for being output to the time domain filter 14, where the chosen estimation signal Sls is the one previously outputted from the output circuit 133. In other words, when the difference is greater than or equal to the threshold value TH, the following time domain filtering and frequency domain filtering is performed according to a previous estimation signal Sls. In this way, the channel estimator 23 may be prevented from providing incorrect estimation signals Sls to update the channel estimation result.

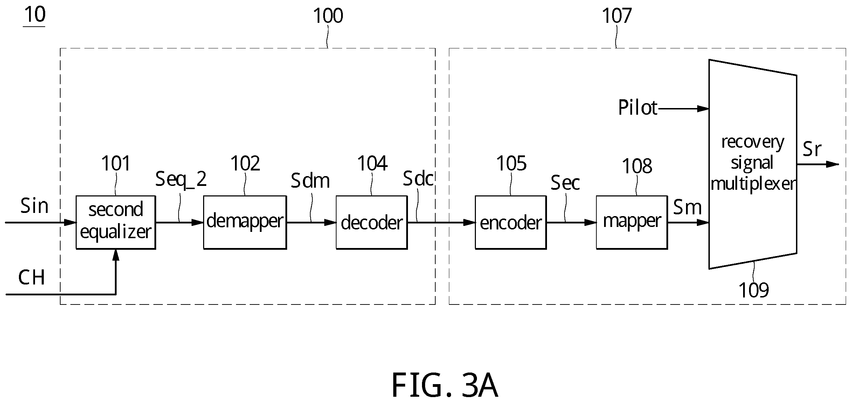

Reference is made to FIG. 3A, which is a block diagram of a signal recovery circuit in the channel estimation circuit 1 according to the embodiment in FIG. 1. As shown in FIG. 3A, the signal recovery circuit 10 includes a receiver 100 and a transmitter 107. The receiver 100 further includes a second equalizer 101, a demapper 102, and a decoder 104. The transmitter 107 includes an encoder 105, a mapper 108 and a recovery signal multiplexer 109. In the receiver 100, the second equalizer 101 receives the input signal Sin and the channel estimation result CH for performing equalization to generate a second equalization signal Seq_2. The demapper 102 coupled to the second equalizer 101 receives and demaps the second equalization signal Seq_2 to generate a demapped signal Sdm. The decoder 104 receives and decodes the demapped signal Sdm to generate decoded content Sdc. In the transmitter 107, the encoder 105 receives and encodes the decoded content Sdc outputted by the decoder 104 to generate encoded content Sec. The mapper 108 receives and maps the encoded content Sec to generate a mapped signal Sm. The recovery signal multiplexer 109 receives the mapped signal Sm and a pilot signal Pilot, so as to insert the pilot signal Pilot into the mapped signal Sm, and to output the recovery signal Sr.

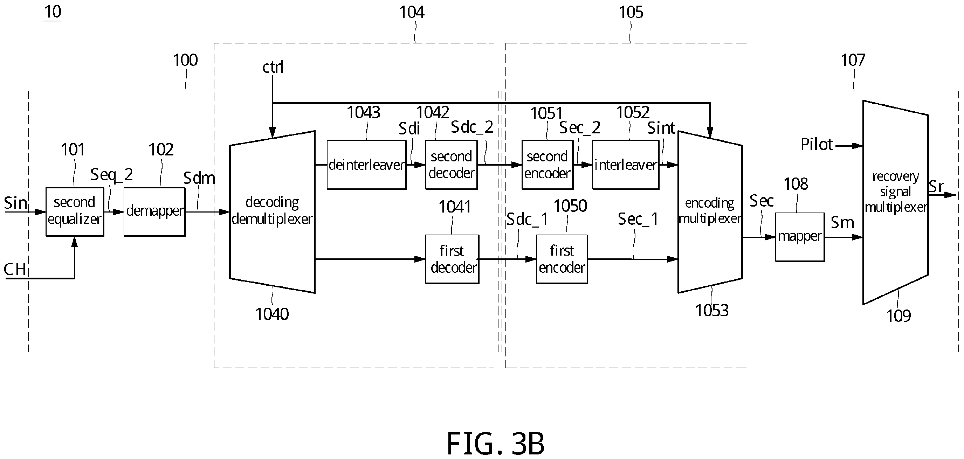

FIG. 3B is a block diagram of another signal recovery circuit in the channel estimation circuit of the embodiment in FIG. 1. The embodiment in FIG. 3B differs from the one in FIG. 3A in that the decoder 104 further includes a decoding demultiplexer 1040, a first decoder 1041, a second decoder 1042, and a deinterleaver 1043. The encoder 105 further includes a first encoder 1050, a second encoder 1051, an interleaver 1052, and an encoding multiplexer 1053. Other structural details are the same as those shown in FIG. 3A and the detail description thereof will be omitted herein.

As shown in FIG. 3B, the decoding demultiplexer 1040 of the decoder 104 is coupled to the demapper 102 for receiving the demapped signal Sdm and outputting the demapped signal Sdm to the first decoder 1041 or the deinterleaver 1043. The first decoder 1041 receives and decodes the demapped signal Sdm to generate first decoded content Sdc_1. The deinterleaver 1043 receives and deinterleaves the demapped signal Sdm to generate a deinterleaved signal Sdi. The second decoder 1042 is coupled to the deinterleaver 1043 for receiving and decoding the deinterleaved signal Sdi to generate second decoded content Sdc_2. The first encoder 1050 of the encoder 105 receives and encodes the first decoded content Sdc_1 to generate a first encoded content Sec_1. The second encoder 1051 receives and encodes the second decoded content Sdc_2 to generate second encoded content Sec_2. The interleaver 1052 receives and interleaves the second encoded content Sec_2 to generate an interleaved signal Sint. The encoding multiplexer 1053 receives the interleaved signal Sint and the first encoded content Sec_1, and outputs one of the interleaved signal Sint and the first encoded content Sec_1 as the encoded content Sec.

In the embodiment shown in FIG. 3B, the first decoder 1041 and the second decoder 1042 may be an LDPC decoder and a Viterbi decoder, respectively. The first encoder 1050 and the second encoder 1051 may be an LDPC encoder and a convolutional code (such as BCC) encoder. When the input signal Sin is the data symbol DATA, the decoding demultiplexer 1040 may output the demapped signal Sdm, which is correspondingly generated, to the first decoder 1041. When the input signal Sin is the signal symbol SIG, the decoding demultiplexer 1040 may output the demapped signal Sdm, which is correspondingly generated, through the deinterleaver 1043 to the second decoder 1042.

It should be noted that, in practice, a combination of the deinterleaver, the Viterbi decoder, the convolutional code encoder and the interleaver may be used for decoding and encoding the signal symbol SIG. In the meanwhile, a combination of the deinterleaver, the Viterbi decoder, the convolutional code encoder and the interleaver, or a combination of the LDPC decoder and the LDPC encoder may be used for decoding and encoding the data symbol DATA. Therefore, as shown in the embodiment in FIG. 3A, the decoder 104 may include the deinterleaver and the Viterbi decoder for receiving the content of the demapped signal Sdm and generating the decoded content Sdc. Meanwhile, the encoder 105 in FIG. 3A may include the convolutional code encoder and the interleaver (not shown in FIG. 3A) for receiving the decoded content Sdc to generate the encoded content Sec.

Taking a Wi-Fi communication device for example, the receiver 100 shown in FIG. 3A and FIG. 3B may be an inherent receiving circuit in the Wi-Fi communication device, used for decoding received signals, and the transmitter 107 may be an inherent transmitting circuit used for encoding signals to be transmitted. Accordingly, the goal of recovering transmission signal for channel estimation can be achieved without increasing cost or size of the device, and the receiving circuit and the transmitting circuit may provide unexpected technical effects different from that of the prior art.

In each embodiment in FIG. 1 to FIG. 3B above, the channel estimation circuit 1 may receive a control signal ctrl from outside, for example, the control signal ctrl may be generated by a controller (not shown) of the Wi-Fi communication device having the channel estimation circuit 1. The control signal ctrl is used for controlling the transmission signal multiplexer 11, the input demultiplexer 12, the input multiplexer 17, the decoding demultiplexer 1040, the encoding multiplexer 1053, or combinations of the above elements, so that the elements choose their routes according to the symbol types corresponding to the input signal Sin. As mentioned above, each received input signal Sin may be one of the long training field symbol LTF, the signal symbol SIG, and the data symbol DATA. The control signal ctrl controls the multiplexers and the multiplexers, so that the signal recovery circuit 10 can correspondingly perform signal recovery. It should be noted that, in the present disclosure, the estimation is performed using a currently received symbol along with a previously estimated channel estimation value, and the newly calculated channel estimation value may then be used for recovering the received signal symbol or data symbol subsequent to the current received symbol, and for determining correctness of the recovered transmission signal Str.

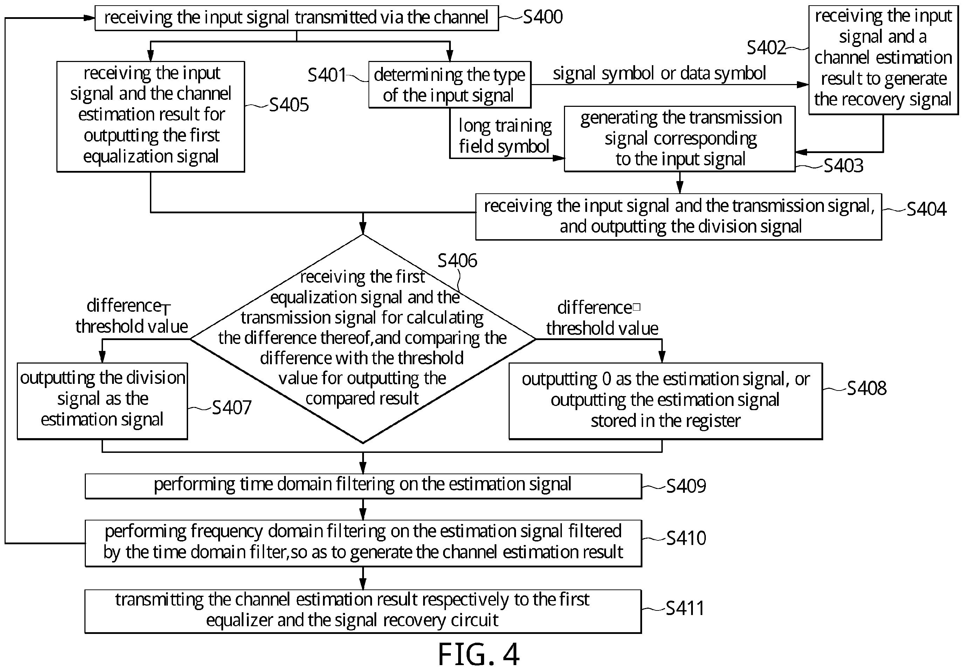

Reference is made to FIG. 4, which shows a flowchart of a channel estimation method according to an embodiment of the present disclosure. As the method may be implemented by the channel estimation circuits shown in FIG. 1 to FIG. 3B, reference is further made to the corresponding elements in FIG. 1 to FIG. 3B. As shown in FIG. 4, the channel estimation method of the present disclosure can include the following steps: step S400: receiving the input signal Sin transmitted via the channel by the channel estimation circuit 1; the input signal Sin being one of the long training field symbol LTF, the signal symbol SIG and the data symbol DATA; step S401: determining the type of the input signal Sin, wherein when the input signal Sin is the signal symbol SIG or the data symbol DATA, step S402 is performed, when the input signal Sin is the long training field symbol LTF, step S403 is performed; step S402: receiving the input signal Sin and a channel estimation result CH to generate the recovery signal Sr by the signal recovery circuit 10; step S403: generating the transmission signal Str corresponding to the input signal Sin, wherein when the input signal Sin is the signal symbol SIG or the data symbol DATA, the transmission signal Str is the recovery signal Sr calculated in step S402, when the input signal Sin is the long training field symbol LTF, the transmission signal Str is the known sequence PN; step S404: receiving the input signal Sin and the transmission signal Str, and outputting the division signal H by the divider 131 for obtaining the channel characteristic; step S405: receiving the input signal Sin and the channel estimation result CH by the first equalizer 130 for outputting the first equalization signal Seq_1; step S406: receiving the first equalization signal Seq_1 and the transmission signal Str by the comparator 132, so as to calculate the difference between the first equalization signal Seq_1 and the transmission signal Str, and compare the difference and the threshold value TH for outputting the compared result Scomp, wherein when the compared result shows that the difference is smaller than the threshold value TH, step S407 is performed; step S407: outputting the division signal H as the estimation signal Sls by the output circuit 133, and when the compared result shows that the difference is greater than or equal to the threshold value TH, step S408 is performed; step S408: outputting 0 as the estimation signal Sls by the output circuit 133, or using the estimation signal stored in the register to replace the division signal H as the estimation signal Sls; step S409: performing time domain filtering on the estimation signal Sls by the time domain filter 14; step S410: performing frequency domain filtering by the frequency domain filter 15 on the estimation signal filtered by the time domain, so as to generate the channel estimation result CH, and returning to step S400 for receiving next input signal Sin to continue tracking the channel status; and step S411: after the channel estimation result CH is generated, transmitting the channel estimation result CH back to the first equalizer 130 and the signal recovery circuit 10 respectively, so that the first equalizer 130 may perform equalization as described in step S405 according to the newly received input signal Sin and the channel estimation result CH returned by the frequency domain filter 15 to generate the first equalization signal Seq_1, and the signal recovery circuit 10 may perform calculation as described in step S402 according to the newly received input signal Sin and the aforementioned channel estimation result CH to generate the recovery signal Sr.

As can be observed from FIG. 4, after the channel estimation result CH is generated in step S410, the signal recovery circuit 10 and the first equalizer 130 respectively receive the channel estimation result CH in step S411. In the meanwhile, the process goes back to step S400 to receive a new input signal Sin, so that the signal recovery circuit 10 and the first equalizer 130 respectively obtain the new input signal Sin. Therefore, in steps S402 and S405, the signal recovery circuit 10 and the first equalizer 130 may respectively use the channel estimation result CH calculated based on the previous input signal to perform channel estimation on the current input signal Sin, and increase the reliability of the channel estimation result at each time when a channel estimate result is generated.

In another embodiment, the channel estimation method shown in FIG. 4 may further include the following steps after step S400. The following steps include using the input demultiplexer 12 to output the input signal Sin to the delay line 16 or the input multiplexer 17. The input multiplexer 17 then transmits the input signal Sin from the input demultiplexer 12 or from the delay line 16 to the channel estimator 13. When the input signal Sin is the training symbol or the signal symbol, the input demultiplexer 12 directly outputs the input signal Sin to the input multiplexer 17 and the channel estimator 13 sequentially. When the input signal Sin is the data symbol, the input demultiplexer 12 outputs the input signal to the delay line 16, and the input signal Sin is delayed and then transmitted to the channel estimator 13 by the input multiplexer 17. In addition, after step S403, the channel estimation method may further include: using the transmission signal multiplexer 11 to receive the recovery signal Sr and the known sequence PN, and to output one of the recovery signal Sr and the known sequence PN as the transmission signal Str. When the input signal Sin is the training symbol, the transmission signal multiplexer 11 outputs the known sequence PN. When the input signal Sin is the signal symbol or the data symbol, the transmission signal multiplexer 11 outputs the recovery signal Sr.

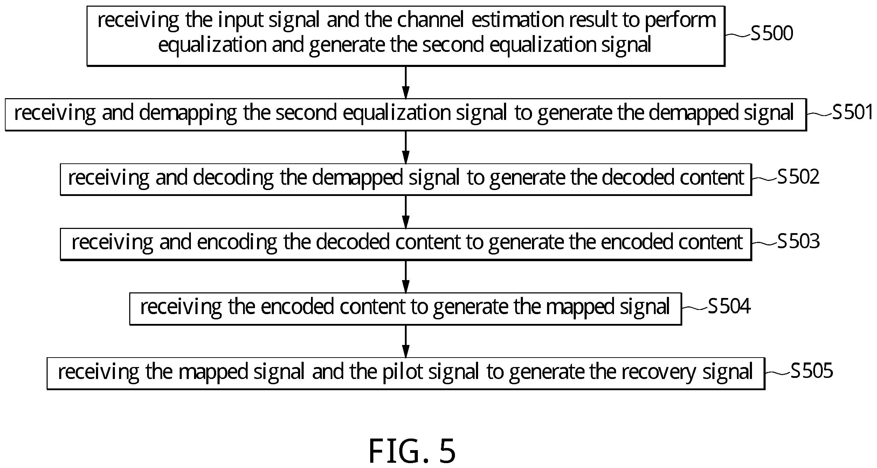

FIG. 5 shows procedural details of step S402 in FIG. 4, which may be implemented by the signal recovery circuit 10 shown in FIG. 3A, thus reference may be made to FIG. 3A in conjunction with FIG. 5. As shown in FIG. 5, step S402 in FIG. 4 includes the following steps: step S500: receiving the input signal Sin and the channel estimation result CH to perform equalization and generate the second equalization signal Seq_2 by the second equalizer 101; step S501: receiving and demapping the second equalization signal Seq_2 to generate the demapped signal Sdm by the demapper 102; step S502: receiving and decoding the demapped signal Sdm to generate the decoded content Sdc by the decoder 104; step S503: receiving and encoding the decoded content Sdc to generate the encoded content Sec by using the encoder 105; step S504: receiving the encoded content Sec to generate the mapped signal Sm by the mapper 108; and step S505: receiving the mapped signal Sm and the pilot signal Pilot to generate the recovery signal Sr by the recovery signal multiplexer 109.

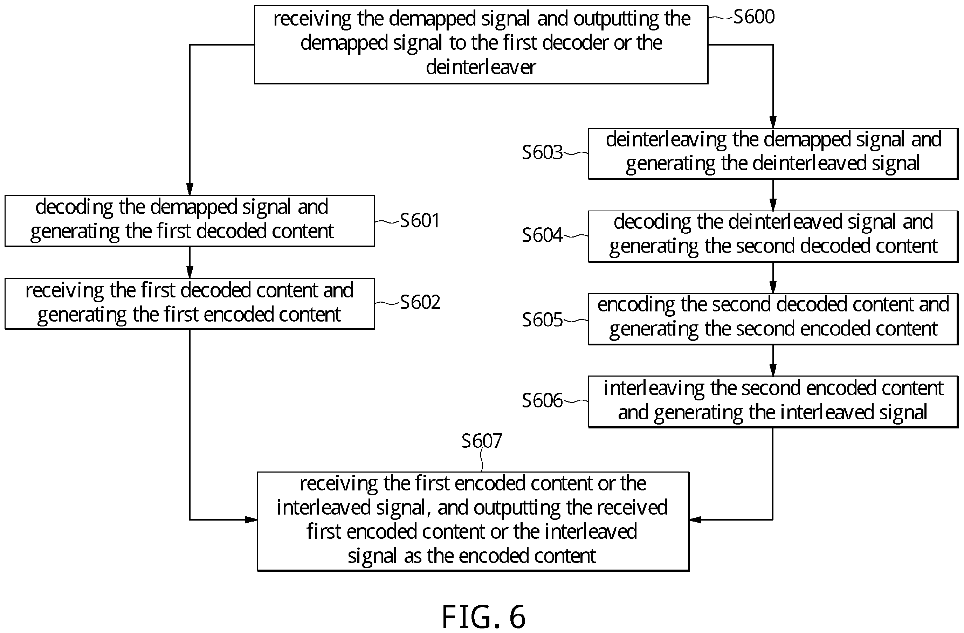

FIG. 6 shows procedural details of steps S503 to S504 in FIG. 5, which may be implemented by the decoder 104 and the encoder 105 shown in FIG. 3B, thus reference is made to FIG. 6 in conjunction with FIG. 3B. As shown in FIG. 6, steps S503 to S504 in FIG. 5 include the following steps: step S600: receiving the demapped signal Sdm and outputting the demapped signal Sdm to the first decoder 1041 or the deinterleaver 1043 according to the control signal ctrl by the decoding demultiplexer 1040. When the demapped signal Sdm is outputted to the first decoder 1041, step S601 is performed; when the demapped signal Sdm is outputted to the deinterleaver 1043, step S603 is performed. Step S601: decoding the demapped signal Sdm and generating the first decoded content Sdc_1 by the first decoder 1041; step S602: receiving and encoding the first decoded content Sdc_1, so as to generate the first encoded content Sec_1 by the first encoder 1050; step S603: deinterleaving the demapped signal Sdm and generating the deinterleaved signal Sdi by the deinterleaver 1043; step S604: decoding the deinterleaved signal Sdi and generating the second decoded content Sdc_2 by the second decoder 1042; step S605: encoding the second decoded content Sdc_2 and generating the second encoded content Sec_2 by the second encoder 1051; step S606: interleaving the second encoded content Sec_2 and generating the interleaved signal Sint by the interleaver 1052; and step S607: receiving the first encoded content Sec_1 generated in step S602 or the interleaved signal Sint generated in step S606, and outputting the received first encoded content Sec_1 or the received interleaved signal Sint as the encoded content Sec by the encoding multiplexer 1053. In the embodiment, the first decoder 1041, the second decoder 1042, the first encoder 1050 and the second encoder 1051 may sequentially be the DLPC decoder, the Viterbi decoder, the DLPC encoder and the convolutional code encoder. If in step S600, the received demapped signal Sdm is originated from a data symbol, the flow may be directed to step S601 and subsequent steps thereof according to the control signal ctrl. On the other hand, if the received demapped signal Sdm is originated from a signal symbol, the flow may be directed to step S603 and subsequent steps thereof according to the control signal ctrl.

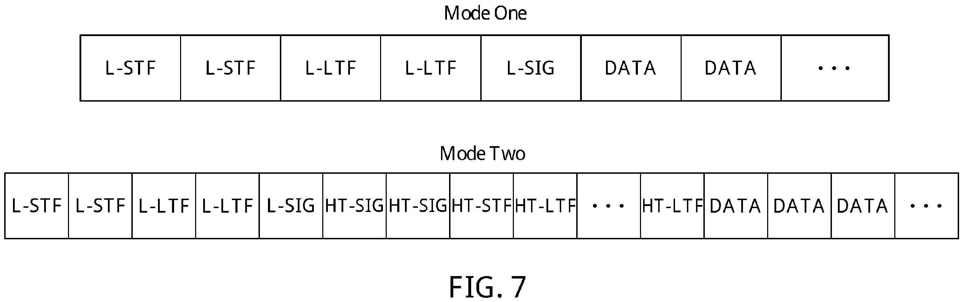

FIG. 7 shows specified data unit formats of various communication systems. Mode one shown in FIG. 7 illustrates the Legacy mode PPDU of IEEE 802.11a/n standard. The PPDU sequentially includes two short training field symbol L-STFs, two long training field symbol L-LTFs, one signal symbol L-SIG and several data symbol DATA. According to several embodiments of the present disclosure, when the channel estimation circuit begins to receive input signals, that is, to sequentially receive the symbols according to the PPDU format, two long training field symbol L-LTFs and the known transmission signal (i.e. known sequence) may firstly be used to perform channel estimation, and generate the channel estimation result. The second long training field symbol L-LTF is followed by the signal symbol L-SIG, thus the channel estimation result generated based on the second long training field symbol L-LTF may be returned to the signal recovery circuit and channel estimator, so that the channel estimation circuit can, according to the received signal symbol L-SIG and the channel estimation result calculated based on the second long training field symbol L-LTF, recover the transmission signal of the signal symbol L-SIG and determine the correctness of the recovered transmission signal Str to perform channel estimation, and further update the channel estimation result. Next, the channel estimation result calculated based on the signal symbol L-SIG is returned again for recovering the transmission signal of the first data symbol DATA after the signal symbol, determining the correctness of the transmission signal, performing channel estimation, and updating channel estimation results, etc.

Mode two illustrates the Mixed mode PPDU format in the IEEE 802.11n standard. Different from mode one, in mode two, two high transmission rate signal symbols HT-SIG, one high transmission rate short training field symbol HT-STF, and one to four high transmission rate long training field symbols HT-LTFs are sequentially added between the signal symbol L-SIG and the data symbol DATA. Although the formats would be arranged differently, according to each embodiment of the present disclosure, the channel estimation circuit receives the first high transmission rate signal symbol HT-SIG, and then the channel estimation circuit may also, according to the channel estimation result generated by the signal symbol L-SIG, recover the transmission signal of the high transmission rate signal symbol HT-SIG and determine the correctness of the transmission signal, so as to perform channel estimation and update the channel estimation result. The subsequent symbols are all processed in the same manner.

In addition to the two modes illustrated in FIG. 7, the channel estimation circuit and the method of the present disclosure may also apply to the HT-greenfield mode and the VHT mode of IEEE 802.11n standard. However the details of channel estimation regarding these two modes are omitted herein for being similar to those illustrated in FIG. 7. In addition, since the short training field symbol (L-STF or HT-STF) is generally not used for channel estimation, in the embodiment, when the communication device with the channel estimation circuit receives the short training field symbol, the short training field symbol will not be transmitted to the channel estimation circuit for channel estimation. However, in other embodiments, the short training field symbol may be processed as the long training field symbol, and the present disclosure is not limited thereto.

In summary, in the channel estimation method and the channel estimation circuit of the present disclosure, not only the received training symbol and the known transmission signal thereof are used for channel estimation, but the signal recovery circuit may be used to recover and obtain the originally unknown transmission signals of the input signals other than the training symbol, so symbols other than the training symbol can be used for channel estimation. In addition, in the channel estimation method and the channel estimation circuit of the present disclosure, the channel estimation result calculated based on a previous input signal can be used for recovering the transmission signal of the currently received input signal to calculate an updated channel estimation result, and the updated channel estimation result may be used for recovering the transmission signal of a next input signal. Accordingly, in the channel estimation method and the estimation circuit of the present disclosure, the channel estimation value may be continuously calculated and updated based on different types of symbols received by the circuit, and the channel status variations during the transmission of the signal may be effectively tracked, such that the present disclosure can perform a more effective channel estimation than a channel estimation using only the training symbol.

In addition, in the channel estimation method and the channel estimation circuit of the present disclosure, the channel estimation result used in the channel estimator may be used for confirming the correctness of the recovered transmission signal, and if incorrectness occurs, the incorrect transmission signal will not be used, so as to avoid outputting an incorrect channel estimation result and spreading the effect of the error, and to increase the correctness and effectiveness of the channel estimation.

Furthermore, the channel estimation method and the channel estimation circuit of the present disclosure is completely adaptable for use with wireless communication standards such as the IEEE 802.11a/n/ac/ax standards, and is able to be applied to a Wi-Fi communication device. For application in the Wi-Fi communication device, the original receiver and transmitter of the Wi-Fi communication device may be used as the signal recovery circuit for recovering the input signal, so that no additional hardware is needed for the signal recovery circuit. This makes the receiver and transmitter of the Wi-Fi communication device more effective than those of the prior art.

Furthermore, the channel estimation result may be continuously updated for tracking dynamic channel status variations, and parameters of the time domain filter may be adjusted according to the channel variations for obtaining an improved filtering effect, so as to increase the correctness of the channel estimation result outputted by the channel estimation circuit to form a virtuous cycle.

Accordingly, in the channel estimation method and channel estimation circuit of the present disclosure, the signal symbol and data symbol can be recovered for continuous channel estimation so that the channel variation can be tracked, thereby avoiding the outputting of incorrect channel estimation results, and largely improving the effectiveness of the channel estimation.

The aforementioned descriptions merely represent the preferred embodiments of the present disclosure, without any intention to limit the scope of the present disclosure which is fully described only within the following claims.

## Claims

1. A channel estimation circuit (1), **characterized in that**, the channel estimation circuit (1) comprises:
a signal recovery circuit (10) receiving an input signal (Sin) and generating a recovery signal (Sr) as a transmission signal (Str) corresponding to the input signal (Sin);
a channel estimator (13) coupled to the signal recovery circuit (10) and including:
a divider (131) receiving the input signal (Sin) and the transmission signal (Str), and outputting a division signal (H);
a first equalizer (130) receiving the input signal (Sin) and outputting a first equalization signal (Seq_1);
a comparator (132) receiving the first equalization signal (Seq_1) and the transmission signal (Str) for calculating a difference between the first equalization signal (Seq_1) and the transmission signal (Str), and comparing the difference with a threshold value (TH) for outputting a comparison result (Scomp); and
an output circuit (133) receiving the division signal (H) and outputting an estimation signal (Sls) according to the comparison result (Scomp), wherein the division signal (H) is output as the estimation signal (Sls) when the comparison result (Scomp) showing that the difference is smaller than the threshold value (TH);
a time domain filter (14) coupled to the channel estimator (13) and performing time domain filtering on the estimation signal (Sls); and
a frequency domain filter (15) coupled to the time domain filter (14) and performing frequency domain filtering on the estimation signal (Sls) filtered by the time domain filter (14), so as to generate a channel estimation result (CH);
wherein the channel estimation result (CH) is transmitted to the first equalizer (130) and the signal recovery circuit (10), the first equalizer (130) generates the first equalization signal (Seq_1) according to the input signal (Sin) and the channel estimation result (CH), and the signal recovery circuit (10) generates the recovery signal (Sr) according to the input signal (Sin) and the channel estimation result (CH);
wherein the channel estimator (13) further includes:
a register (134) coupled to the output circuit (133) and storing the estimation signal (Sls) outputted by the output circuit (133);
wherein when the comparison result (Scomp) shows that the difference is greater than or equal to the threshold value (TH), the output circuit (133) outputs the estimation signal (Sls) stored by the register (134).

2. The channel estimation circuit (1) of claim 1, **characterized in that**, the channel estimation circuit (1) further comprises:
a transmission signal multiplexer (11) coupled to the signal recovery circuit (10) for receiving the recovery signal (Sr) and a known sequence, and outputting one of the recovery signal (Sr) and the known sequence as the transmission signal (Str);
wherein when the input signal (Sin) is a training symbol, the transmission signal multiplexer (11) outputs the known sequence, and when the input signal (Sin) is a signal symbol or a data symbol, the transmission signal multiplexer (11) outputs the recovery signal (Sr).

3. The channel estimation circuit (1) of claim 2, **characterized in that**, the channel estimation circuit (1) further comprises:
an input multiplexer (17);
a delay line (16) receiving and delaying the input signal (Sin), and outputting the delayed input signal (Sin) to the input multiplexer (17);
an input demultiplexer (12) receiving the input signal (Sin) and outputting the input signal (Sin) to the delay line (16) or the input multiplexer (17); and
wherein when the input signal (Sin) is a training symbol or a signal symbol, the input demultiplexer (12) outputs the input signal (Sin) to the input multiplexer (17), and when the input signal (Sin) is a data symbol, the input demultiplexer (12) outputs the input signal (Sin) to the delay line (16);
wherein the input multiplexer (17) receives the input signal (Sin) transmitted by either the delay line (16) or the input demultiplexer (12), and outputs the input signal (Sin) from one of the delay line (16) and the input demultiplexer (12) to the channel estimator (13).

4. The channel estimation circuit (1) of claim 1, **characterized in that**, the signal recovery circuit (10) comprises:
a receiver (100) including:
a second equalizer (101) receiving the input signal (Sin) and the channel estimation result (CH), and outputting a second equalization signal (Seq_2); a demapper (102) coupled to the second equalizer (101) for receiving the second equalization signal (Seq_2) and outputting a demapped signal (Sdm); anda decoder (104) receiving the demapped signal (Sdm) and outputting decoded content (Sdc); and
a transmitter (107) including:
an encoder (105) receiving the decoded content (Sdc) and outputting encoded content (Sec); a mapper (108) receiving the encoded content (Sec) and outputting a mapped signal (Sm); and a recovery signal multiplexer (109) receiving the mapped signal (Sm) and a pilot signal (Pilot), and outputting the recovery signal (Sr).

5. The channel estimation circuit (1) of claim 4, **characterized in that**, the decoder (104) further includes:
a first decoder (1041) receiving the demapped signal (Sdm) and outputting first decoded content (Sdc_1);
a deinterleaver (1043) receiving the demapped signal (Sdm) and outputting a deinterleaved signal (Sdi);
a second decoder (1042) coupled to the deinterleaver (1043) for receiving the deinterleaved signal (Sdi) and outputting second decoded content (Sdc_2); and
a decoding demultiplexer (1040) coupled to the demapper (102) for receiving the demapped signal (Sdm) and outputting the demapped signal (Sdm) to the first decoder (1041) or the deinterleaver (1043); and
the encoder (105) further includes:
a first encoder (1050) receiving the first decoded content (Sdc_1) and outputting first encoded content (Sec_1);
a second encoder (1051) receiving the second decoded content (Sdc_2) and outputting second encoded content (Sec_2);
an interleaver (1052) receiving the second encoded content (Sec_2) and outputting an interleaved signal (Sint); and
an encoding multiplexer (1053) receiving the interleaved signal (Sint) and the first encoded content (Sec_1), and outputting one of the interleaved signal (Sint) and the first encoded content (Sec_1) as the encoded content (Sec).

6. A channel estimation method, **characterized in that**, the channel estimation method comprises steps of:
receiving an input signal (Sin) and generating a recovery signal (Sr) as a transmission signal (Str) corresponding to the input signal (Sin) by a signal recovery circuit (10);
receiving the input signal (Sin) and the transmission signal (Str) and outputting a division signal (H) by a divider (131);
receiving the input signal (Sin) and outputting a first equalization signal (Seq_1) by a first equalizer (130);
receiving the first equalization signal (Seq_1) and the transmission signal (Str) for calculating a difference between the first equalization signal (Seq_1) and the transmission signal (Str), and comparing the difference with a threshold value (TH) for outputting a comparison result (Scomp) by a comparator (132);
receiving the division signal (H) and outputting an estimation signal (Sls) according to the comparison result (Scomp) by an output circuit (133), wherein the division signal (H) is output as the estimation signal (Sls) when the comparison result (Scomp) showing that the difference is smaller than the threshold value (TH);
performing time domain filtering on the estimation signal (Sls) by a time domain filter (14); and
performing frequency domain filtering by a frequency domain filter (15) on the estimation signal (Sls) filtered by the time domain filter (14), so as to generate a channel estimation result (CH);
wherein the channel estimation result (CH) is transmitted to the first equalizer (130) and the signal recovery circuit (10), the first equalizer (130) generates the first equalization signal (Seq_1) according to the input signal (Sin) and the channel estimation result (CH), and the signal recovery circuit (10) generates the recovery signal (Sr) according to the input signal (Sin) and the channel estimation result (CH);
wherein the channel estimation method further comprises a step of:
storing the estimation signal (Sls) outputted from the output circuit (133) by a register (134);
wherein when the comparison result (Scomp) shows that the difference is greater than or equal to the threshold value (TH), the output circuit (133) outputs the estimation signal (Sls) stored in the register (134) or outputs the estimation signal (Sls) of 0.

7. The channel estimation method of claim 6, **characterized in that**, the channel estimation method further comprises a step of:
receiving the recovery signal (Sr) and a known sequence, and outputting one of the recovery signal (Sr) and the known sequence as the transmission signal (Str) by a transmission signal multiplexer (11);
wherein when the input signal (Sin) is a training symbol, the transmission signal multiplexer (11) outputs the known sequence, and when the input signal (Sin) is a signal symbol or a data symbol, the transmission signal multiplexer (11) outputs the recovery signal (Sr).

8. The channel estimation method of claim 6, **characterized in that**, the channel estimation method further comprises steps of:
receiving the input signal (Sin) and outputting the input signal (Sin) to a delay line (16) or an input multiplexer (17) by a input demultiplexer (12); and
receiving the input signal (Sin) transmitted by either the input demultiplexer (12) or the delay line (16), and outputting the input signal (Sin) from one of the input demultiplexer (12) and the delay line (16) to the channel estimator (13) by the input multiplexer (17);
wherein when the input signal (Sin) is a training symbol or a signal symbol, the input demultiplexer (12) outputs the input signal (Sin) to the input multiplexer (17), and when the input signal (Sin) is a data symbol, the input demultiplexer (12) outputs the input signal (Sin) to the delay line (16), and outputs the input signal (Sin) being delayed to the input multiplexer (17).

9. The channel estimation method of claim 6, **characterized in that**, the step of receiving the input signal (Sin) and generating the recovery signal (Sr) as the transmission signal (Str) corresponding to the input signal (Sin) comprises steps of:
receiving the input signal (Sin) and the channel estimation result (CH), and outputting a second equalization signal (Seq_2) by a second equalizer (101);
receiving the second equalization signal (Seq_2) and outputting a demapped signal (Sdm) by a demapper (102);
receiving the demapped signal (Sdm) and outputting decoded content (Sdc) by a decoder (104);
receiving the decoded content (Sdc) and outputting encoded content (Sec) by an encoder (105);
receiving the encoded content (Sec) and outputting a mapped signal (Sm) by a mapper (108); and
receiving the mapped signal (Sm) and a pilot signal (Pilot), and outputting the recovery signal (Sr) by a recovery signal multiplexer (109).

10. The channel estimation method of claim 9, **characterized in that**, the step of receiving the demapped signal (Sdm) and outputting the decoded content (Sdc) includes steps of:
receiving the demapped signal (Sdm) and outputting the demapped signal (Sdm) to a first decoder (1041) or a deinterleaver (1043) by a decoding demultiplexer (1040);
receiving the demapped signal (Sdm) and outputting first decoded content (Sdc_1) by a first decoder (1041);
receiving the demapped signal (Sdm) and outputting a deinterleaved signal (Sdi) by the deinterleaver (1043);
receiving the deinterleaved signal (Sdi) and outputting second decoded content (Sdc_2) by a second decoder (1042);
receiving the first decoded content (Sdc_1) and outputting first encoded content (Sec_1) by a first encoder (1050);
receiving the second decoded content (Sdc_2) and outputting second encoded content (Sec_2) by a second encoder (1051);
receiving the second encoded content (Sec_2) and outputting an interleaved signal (Sint) by an interleaver (1052); and
receiving the interleaved signal (Sint) and the first encoded content (Sec_1), and outputting one of the interleaved signal (Sint) and the first encoded content (Sec_1) as the encoded content (Sec) by an encoding multiplexer (1053).

11. A channel estimation circuit (1), **characterized in that**, the channel estimation circuit (1) comprises:
a signal recovery circuit (10) receiving an input signal (Sin) and generating a recovery signal (Sr) as a transmission signal (Str) corresponding to the input signal (Sin);
a channel estimator (13) coupled to the signal recovery circuit (10) and including:
a divider (131) receiving the input signal (Sin) and the transmission signal (Str), and outputting a division signal (H);
a first equalizer (130) receiving the input signal (Sin) and outputting a first equalization signal (Seq_1);
a comparator (132) receiving the first equalization signal (Seq_1) and the transmission signal (Str) for calculating a difference between the first equalization signal (Seq_1) and the transmission signal (Str), and comparing the difference with a threshold value (TH) for outputting a comparison result (Scomp); and
an output circuit (133) receiving the division signal (H) and outputting an estimation signal (Sls) according to the comparison result (Scomp), wherein the division signal (H) is output as the estimation signal (Sls) when the comparison result (Scomp) showing that the difference is smaller than the threshold value (TH);
a time domain filter (14) coupled to the channel estimator (13) and performing time domain filtering on the estimation signal (Sls); and
a frequency domain filter (15) coupled to the time domain filter (14) and performing frequency domain filtering on the estimation signal (Sls) filtered by the time domain filter (14), so as to generate a channel estimation result (CH);
wherein the channel estimation result (CH) is transmitted to the first equalizer (130) and the signal recovery circuit (10), the first equalizer (130) generates the first equalization signal (Seq_1) according to the input signal (Sin) and the channel estimation result (CH), and the signal recovery circuit (10) generates the recovery signal (Sr) according to the input signal (Sin) and the channel estimation result (CH);
wherein when the comparison result (Scomp) shows that the difference is greater than or equal to the threshold value (TH), the output circuit (133) outputs the estimation signal (Sls) of 0.

## Patentansprüche

1. Kanalschätzung-Schaltkreis (1), **dadurch gekennzeichnet, dass** der Kanalschätzung-Schaltkreis (1) aufweist:
einen Signalregenerierung-Schaltkreis (10), welcher ein Eingangssignal (Sin) empfängt und ein Regenerierungssignal (Sr) erzeugt als ein Übertragungssignal (Str), welches mit dem Eingangssignal (Sin) korrespondiert,
eine Kanalschätzung-Vorrichtung (13), welche mit dem Signalregenerierung-Schaltkreis (10) verbunden ist und aufweist:
einen Teiler (131), welcher das Eingangssignal (Sin) und das Übertragungssignal (Str) empfängt und ein Teilungssignal (H) ausgibt,
einen ersten Entzerrer (130), welcher das Eingangssignal (Sin) empfängt und ein erstes Entzerrungssignal (Seq_1) ausgibt,
einen Komparator (132), welcher das erste Entzerrungssignal (Seq_1) und das Übertragungssignal (Str) empfängt zum Berechnen einer Differenz zwischen dem ersten Entzerrungssignal (Seq_1) und dem Übertragungssignal (Str), und welcher die Differenz mit einem Grenzwert (TH) vergleicht zum Ausgeben eines Vergleichsergebnisses (Scomp), und
einen Ausgang-Schaltkreis (133), welcher das Teilungssignal (H) empfängt und ein Schätzungssignal (Sls) ausgibt entsprechend dem Vergleichsergebnis (Scomp), wobei das Teilungssignal (H) als das Schätzungssignal (Sls) ausgegeben wird, wenn das Vergleichsergebnis (Scomp) zeigt, dass die Differenz kleiner als der Grenzwert (TH) ist,
einen Zeitbereichsfilter (14), welcher mit der Kanalschätzung-Vorrichtung (13) verbunden ist und das Zeitbereichsfiltern an dem Schätzungssignal (Sls) durchführt, und
einen Frequenzbereichsfilter (15), welcher mit dem Zeitbereichsfilter (14) verbunden ist und das Frequenzbereichsfiltern an dem Schätzungssignal (Sls) durchführt, welches mittels des Zeitbereichsfilters (14) gefiltert ist, um ein Kanalschätzungsergebnis (CH) zu erzeugen,
wobei das Kanalschätzungsergebnis (CH) an den ersten Entzerrer (130) und den Signalregenerierung-Schaltkreis (10) übertragen wird, der erste Entzerrer (130) das erste Entzerrungssignal (Seq_1) entsprechend dem Eingangssignal (Sin) und dem Kanalschätzungsergebnis (CH) erzeugt, und der Signalregenerierung-Schaltkreis (10) das Regenerierungssignal (Sr) entsprechend dem Eingangssignal (Sin) und dem Kanalschätzungsergebnis (CH) erzeugt,
wobei die Kanalschätzung-Vorrichtung (13) ferner aufweist:
ein Register (134), welches mit dem Ausgang-Schaltkreis (133) verbunden ist und das von dem Ausgang-Schaltkreis (133) ausgegebene Schätzungssignal (Sls) speichert,
wobei, wenn das Vergleichsergebnis (Scomp) zeigt, dass die Differenz größer als oder gleich dem Grenzwert (TH) ist, der Ausgang-Schaltkreis (133) das von dem Register (134) gespeicherte Schätzungssignal (Sls) ausgibt.

2. Kanalschätzung-Schaltkreis (1) gemäß Anspruch 1, **dadurch gekennzeichnet, dass** der Kanalschätzung-Schaltkreis (1) ferner aufweist:
einen Übertragungssignal-Multiplexer (11), welcher mit dem Signalregenerierung-Schaltkreis (10) verbunden ist, um das Regenerierungssignal (Sr) und eine bekannte Sequenz zu empfangen und eines von dem Regenerierungssignal (Sr) und der bekannten Sequenz als das Übertragungssignal (Str) auszugeben,
wobei, wenn das Eingangssignal (Sin) ein Trainingssymbol ist, der Übertragungssignal-Multiplexer (11) die bekannte Sequenz ausgibt, und wenn das Eingangssignal (Sin) ein Signalsymbol oder ein Datensymbol ist, der Übertragungssignal-Multiplexer (11) das Regenerierungssignal (Sr) ausgibt.

3. Kanalschätzung-Schaltkreis (1) gemäß Anspruch 2, **dadurch gekennzeichnet, dass** der Kanalschätzung-Schaltkreis (1) ferner aufweist:
einen Eingang-Multiplexer (17),
eine Verzögerungsleitung (16), welche das Eingangssignal (Sin) empfängt und verzögert und das verzögerte Eingangssignal (Sin) an den Eingang-Multiplexer (17) ausgibt,
einen Eingang-Demultiplexer (12), welcher das Eingangssignal (Sin) empfängt und das Eingangssignal (Sin) an die Verzögerungsleitung (16) oder den Eingang-Multiplexer (17) ausgibt, und
wobei, wenn das Eingangssignal (Sin) ein Trainingssymbol oder ein Signalsymbol ist, der Eingang-Demultiplexer (12) das Eingangssignal (Sin) an den Eingang-Multiplexer (17) ausgibt,
und, wenn das Eingangssignal (Sin) ein Datensymbol ist, der Eingang-Demultiplexer (12) das Eingangssignal (Sin) an die Verzögerungsleitung (16) ausgibt,
wobei der Eingang-Multiplexer (17) das Eingangssignal (Sin) empfängt, welches entweder von der Verzögerungsleitung (16) oder dem Eingang-Demultiplexer (12) übertragen wird, und das Eingangssignal (Sin) von einem von der Verzögerungsleitung (16) oder dem Eingang-Demultiplexer (12) an die Kanalschätzung-Vorrichtung (13) ausgibt.

4. Kanalschätzung-Schaltkreis (1) gemäß Anspruch 1, welcher **dadurch gekennzeichnet ist, dass** der Signalregenerierung-Schaltkreis (10) aufweist:
einen Empfänger (100), welcher aufweist:
einen zweiten Entzerrer (101), welcher das Eingangssignal (Sin) und das Kanalschätzungsergebnis (CH) empfängt und ein zweites Entzerrungssignal (Seq_2) ausgibt, eine Rückabbilde-Vorrichtung 102), welche mit dem zweiten Entzerrer (101) verbunden ist, zum Empfangen des zweiten Entzerrungssignals (Seq_2) und zum Ausgeben eines rückabgebildeten Signals (Sdm), und eine Decodier-Vorrichtung (104), welche das rückabgebildete Signal (Sdm) empfängt und einen decodierten Inhalt (Sdc) ausgibt, und einen Sender (107), welcher aufweist:
eine Codier-Vorrichtung (105), welche den decodierten Inhalt (Sdc) empfängt und den codierten Inhalt (Sec) ausgibt, eine Abbilde-Vorrichtung 108), welche den codierten Inhalt (Sec) empfängt und ein abgebildetes Signal (Sm) ausgibt, und einen Regenerierungssignal-Multiplexer (109), welcher das abgebildete Signal (Sm) und ein Pilotsignal empfängt und das Regenerierungssignal (Sr) ausgibt.

5. Kanalschätzung-Schaltkreis (1) gemäß Anspruch 4, **dadurch gekennzeichnet, dass** die Decodier-Vorrichtung (104) ferner aufweist:
eine erste Decodier-Vorrichtung (1041), welche das rückabgebildete Signal (Sdm) empfängt und ersten decodierten Inhalt (Sdc_1) ausgibt,
eine Entschachtelung-Vorrichtung (1043), welche das rückabgebildete Signal (Sdm) empfängt und ein entschachteltes Signal (Sdi) ausgibt,
eine zweite Decodier-Vorrichtung (1042), welche mit der Entschachtelung-Vorrichtung (1043) verbunden ist, zum Empfangen des entschachtelten Signals (Sdi) und zum Ausgeben von zweitem decodiertem Inhalt (Sdc_2), und
einen Decodier-Demultiplexer (1040), welcher mit der Rückabbilde-Vorrichtung (102) verbunden ist, zum Empfangen des rückabgebildeten Signals (Sdm) und zum Ausgeben des rückabgebildeten Signals (Sdm) an die erste Decodier-Vorrichtung (1041) oder die Entschachtelung-Vorrichtung (1043), und wobei
die Codier-Vorrichtung (105) ferner aufweist:
eine erste Codier-Vorrichtung (1050), welche den ersten decodierten Inhalt (Sdc_1) empfängt und ersten codierten Inhalt ausgibt (Sec_1),
eine zweite Codier-Vorrichtung (1051), welche den zweiten decodierten Inhalt (Sdc_2) empfängt und einen zweiten codierten Inhalt (Sec_2) ausgibt,
eine Verschachtelung-Vorrichtung (1052), welche den zweiten codierten Inhalt (Sec_2) empfängt und ein verschachteltes Signal (Sint) ausgibt, und
einen Codier-Multiplexer (1053), welcher das verschachtelte Signal (Sint) und den ersten codierten Inhalt (Sec_1) empfängt und eines von dem verschachtelten Signal (Sint) oder dem ersten codierten Inhalt (Sec_1) als den codierten Inhalt (Sec) ausgibt.

6. Kanalschätzung-Verfahren, **dadurch gekennzeichnet, dass** das Kanalschätzung-Verfahren die folgenden Schritte aufweist:
Empfangen eines Eingangssignals (Sin) und Erzeugen eines Regenerierungssignals (Sr) als ein Übertragungssignal (Str) entsprechend dem Eingangssignal (Sin) mittels eines Signalregenerierung-Schaltkreises (10),
Empfangen des Eingangssignals (Sin) und des Übertragungssignals (Str) und Ausgeben eines Teilungssignals (H) mittels eines Teilers (131),
Empfangen des Eingangssignals (Sin) und Ausgeben eines ersten Entzerrungssignals (Seq_1) mittels eines ersten Entzerrers (130),
Empfangen des ersten Entzerrungssignals (Seq_1) und des Übertragungssignals (Str) zum Berechnen einer Differenz zwischen dem ersten Entzerrungssignal (Seq_1) und dem Übertragungssignal (Str), und Vergleichen der Differenz mit einem Grenzwert (TH) zum Ausgeben eines Vergleichsergebnisses (Scomp) mittels eines Komparators (132),
Empfangen des Teilungssignals (H) und Ausgeben eines Schätzungssignals (Sls) entsprechend dem Vergleichsergebnis (Scomp) mittels eines Ausgang-Schaltkreises (133), wobei das Teilungssignal (H) als das Schätzungssignal (Sls) ausgegeben wird, wenn das Vergleichsergebnis (Scomp) zeigt, dass die Differenz kleiner als der Grenzwert (TH) ist,
Durchführen von Zeitbereichsfiltern an dem Schätzungssignal (Sls) mittels eines Zeitbereichsfilters (14), und
Durchführen von Frequenzbereichsfiltern mittels eines Frequenzbereichsfilters (15) an dem Schätzungssignal (Sls), welches mittels des Zeitbereichsfilters (14) gefiltert ist, um ein Kanalschätzungsergebnis (CH) zu erzeugen,
wobei das Kanalschätzungsergebnis (CH) zu dem ersten Entzerrer (130) und dem Signalregenerierung-Schaltkreis (10) übertragen wird, der erste Entzerrer (130) das erste Entzerrungssignal (Seq_1) gemäß dem Eingangssignal (Sin) und dem Kanalschätzungsergebnis (CH) erzeugt, und der Signalregenerierung-Schaltkreis (10) das Regenerierungssignal (Sr) gemäß dem Eingangssignal (Sin) und dem Kanalschätzungsergebnis (CH) erzeugt,
wobei das Kanalschätzung-Verfahren ferner den folgenden Schritt aufweist:
Speichern des Schätzungssignals (Sls), welches von dem Ausgang-Schaltkreis (133) ausgegeben wird, mittels eines Registers (134),
wobei, wenn das Vergleichsergebnis (Scomp) zeigt, dass die Differenz größer als oder gleich dem Grenzwert (TH) ist, der Ausgang-Schaltkreis (133) das in dem Register (134) gespeicherte Schätzungssignal (Sls) ausgibt oder das Schätzungssignal (Sls) von 0 ausgibt.

7. Kanalschätzung-Verfahren gemäß Anspruch 6, **dadurch gekennzeichnet, dass** das Kanalschätzung-Verfahren ferner den folgenden Schritt aufweist:
Empfangen des Regenerierungssignals (Sr) und einer bekannten Sequenz, und Ausgeben eines von dem Regenerierungssignal (Sr) oder der bekannten Sequenz als das Übertragungssignal (Str) mittels eines Übertragungssignal-Multiplexers (11),
wobei, wenn das Eingangssignal (Sin) ein Trainingssymbol ist, der Übertragungssignal-Multiplexer (11) die bekannte Sequenz ausgibt, und wenn das Eingangssignal (Sin) ein Signalsymbol oder ein Datensymbol ist, der Übertragungssignal-Multiplexer (11) das Regenerierungssignal (Sr) ausgibt.

8. Das Kanalschätzung-Verfahren gemäß Anspruch 6, **dadurch gekennzeichnet, dass** das Kanalschätzung-Verfahren ferner die folgenden Schritte aufweist:
Empfangen des Eingangssignals (Sin) und Ausgeben des Eingangssignals (Sin) an eine Verzögerungsleitung (16) oder einen Eingang-Multiplexer (17) mittels eines Eingang-Demultiplexers (12), und
Empfangen des Eingangssignals (Sin), welches entweder von dem Eingang-Demultiplexer (12) oder der Verzögerungsleitung (16) übertragen wird, und Ausgeben des Eingangssignals (Sin) von einem von dem Eingang-Demultiplexer (12) oder der Verzögerungsleitung (16) an die Kanalschätzung-Vorrichtung (13) mittels des Eingang-Multiplexers (17),
wobei, wenn das Eingangssignal (Sin) ein Trainingssymbol oder ein Signalsymbol ist, der Eingang-Demultiplexer (12) das Eingangssignal (Sin) an den Eingang-Multiplexer (17) ausgibt, und wenn das Eingangssignal (Sin) ein Datensymbol ist, der Eingang-Demultiplexer (12) das Eingangssignal (Sin) an die Verzögerungsleitung (16) ausgibt und das Eingangssignal (Sin), welches verzögert wird, an den Eingang-Multiplexer (17) ausgibt.

9. Kanalschätzung-Verfahren gemäß Anspruch 6, **dadurch gekennzeichnet, dass** der Schritt des Empfangens des Eingangssignals (Sin) und des Erzeugens des Regenerierungssignals (Sr) als das Übertragungssignal (Str) entsprechend dem Eingangssignal (Sin) folgende Schritte aufweist:
Empfangen des Eingangssignals (Sin) und des Kanalschätzungsergebnisses (CH), und Ausgeben eines zweiten Entzerrungssignals (Seq_2) mittels eines zweiten Entzerrers (101),
Empfangen des zweiten Entzerrungssignals (Seq_2) und Ausgeben eines rückabgebildeten Signals (Sdm) mittels einer Rückabbilde-Vorrichtung (102),
Empfangen des rückabgebildeten Signals (Sdm) und Ausgeben von decodiertem Inhalt (Sdc) mittels einer Decodier-Vorrichtung (104),
Empfangen des decodierten Inhalts (Sdc) und Ausgeben von codiertem Inhalt (Sec) mittels einer Codier-Vorrichtung (105),
Empfangen des codierten Inhalts (Sec) und Ausgeben eines abgebildeten Signals (Sm) mittels einer Abbilde-Vorrichtung (108), und
Empfangen des abgebildeten Signals (Sm) und eines Pilotsignals, und Ausgeben des Regenerierungssignals (Sr) mittels eines Regenerierungssignal-Multiplexers (109).

10. Kanalschätzung-Verfahren gemäß Anspruch 9, **dadurch gekennzeichnet, dass** der Schritt des Empfangens des rückabgebildeten Signals (Sdm) und des Ausgebens des decodierten Inhalts (Sdc) folgende Schritte aufweist:
Empfangen des rückabgebildeten Signals (Sdm) und Ausgeben des rückabgebildeten Signals (Sdm) an eine erste Decodier-Vorrichtung (1041) oder eine Entschachtelung-Vorrichtung (1043) mittels eines Decodier-Demultiplexers (1040),
Empfangen des rückabgebildeten Signals (Sdm) und Ausgeben von erstem decodiertem Inhalt (Sdc_1) mittels einer ersten Decodier-Vorrichtung (1041),
Empfangen des rückabgebildeten Signals (Sdm) und Ausgeben eines entschachtelten Signals (Sdi) mittels der Entschachtelung-Vorrichtung (1043),
Empfangen des entschachtelten Signals (Sdi) und Ausgeben von zweitem decodiertem Inhalt (Sdc_2) mittels einer zweiten Decodier-Vorrichtung (1042),
Empfangen des ersten decodierten Inhalts (Sdc_1) und Ausgeben von erstem codiertem Inhalt (Sec_1) mittels iener ersten Codier-Vorrichtung (1050),
Empfangen des zweiten decodierten Inhalts (Sdc_2) und Ausgeben von zweitem codiertem Inhalt (Sec_2) mittels einer zweiten Codier-Vorrichtung (1051),
Empfangen des zweiten codierten Inhalts (Sdc_2) und Ausgeben eines verschachtelten Signals (Sint) mittels einer Verschachtelung-Vorrichtung (1052), und
Empfangen des verschachtelten Signals (Sint) und des ersten codierten Inhalts (Sec_1) und Ausgeben eines von dem verschachtelten Signal (Sint) oder dem ersten codierten Inhalt (Sec_1) als codierten Inhalt (Sec) mittels eines Codier-Multiplexers (1053).

11. Kanalschätzung-Schaltkreis (1), **dadurch gekennzeichnet, dass** der Kanalschätzung-Schaltkreis (1) aufweist:
einen Signalregenerierung-Schaltkreis (10), welcher ein Eingangssignal (Sin) empfängt und ein Regenerierungssignal (Sr) als ein Übertragungssignal (Str) entsprechend dem Eingangssignal (Sin) erstellt,
eine Kanalschätzung-Vorrichtung (13), welche mit dem Signalregenerierung-Schaltkreis (10) verbunden ist und aufweist:
einen Teiler (131), welcher das Eingangssignal (Sin) und das Übertragungssignal (Str) empfängt und ein Teilungssignal (H) ausgibt,
einen ersten Entzerrer (130), welcher das Eingangssignal (Sin) empfängt und ein erstes Entzerrungssignal (Seq_1) ausgibt,
einen Komparator (132), welcher das erste Entzerrungssignal (Seq_1) und das Übertragungssignal (Str) empfängt zum Berechnen einer Differenz zwischen dem ersten Entzerrungssignal (Seq_1) und dem Übertragungssignal (Str), und welcher die Differenz mit einem Grenzwert (TH) vergleicht zum Ausgeben eines Vergleichsergebnisses (Scomp), und
einen Ausgang-Schaltkreis (133), welcher das Teilungssignal (H) empfängt und ein Schätzungssignal (Sls) entsprechend dem Vergleichsergebnis (Scomp) ausgibt, wobei das Teilungssignal (H) als das Schätzsignal (Sls) ausgegeben wird, wenn das Vergleichsergebnis (Scomp) zeigt, dass die Differenz kleiner als der Grenzwert (TH) ist,
einen Zeitbereichsfilter (14), welcher mit der Kanalschätzung-Vorrichtung (13) verbunden ist und Zeitbereichsfiltern ausführt an dem Schätzungssignal (Sls), und
einen Frequenzbereichsfilter (15), welcher mit dem Zeitbereichsfilter (14) verbunden ist und Frequenzbereichsfiltern an dem Schätzungssignal (Sls) durchführt, welches mittels des Zeitbereichsfilters (14) gefiltert ist, um ein Kanalschätzungsergebnis (CH) zu erzeugen,
wobei das Kanalschätzungsergebnis (CH) zu dem ersten Entzerrer (130) und dem Signalregenerierung-Schaltkreis (10) übertragen wird, der erste Entzerrer (130) das erste Entzerrungssignal (Seq_1) entsprechend dem Eingangssignal (Sin) und dem Kanalschätzungsergebnis (CH) erzeugt, und der Signalregenerierung-Schaltkreis (10) das Regenerierungssignal (Sr) entsprechend dem Eingangssignal (Sin) und dem Kanalschätzungsergebnis (CH) erzeugt,
wobei, wenn das Vergleichsergebnis (Scomp) zeigt, dass die Differenz größer als oder gleich dem Grenzwert (TH) ist, der Ausgang-Schalkreis (133) das Schätzungssignal (Sls) von 0 ausgibt.

## Revendications

1. Circuit d'estimation de canal (1), **caractérisé en ce que** le circuit d'estimation de canal (1) comprend :
un circuit de récupération de signal (10) recevant un signal d'entrée (Sin) et générant un signal de récupération (Sr) sous la forme d'un signal de transmission (Str) correspondant au signal d'entrée (Sin) ;
un estimateur de canal (13) couplé au circuit de récupération de signal (10) et incluant :
un diviseur (131) recevant le signal d'entrée (Sin) et le signal de transmission (Str), et fournissant en sortie un signal de division (H) ;
un premier égaliseur (130) recevant le signal d'entrée (Sin) et fournissant en sortie un premier signal d'égalisation (Seq_1) ;
un comparateur (132) recevant le premier signal d'égalisation (Seq_1) et le signal de transmission (Str) en vue de calculer une différence entre le premier signal d'égalisation (Seq_1) et le signal de transmission (Str), et de comparer la différence à une valeur de seuil (TH) pour fournir en sortie un résultat de comparaison (Scomp) ; et
un circuit de sortie (133) recevant le signal de division (H) et fournissant en sortie un signal d'estimation (Sls) selon le résultat de comparaison (Scomp), dans lequel le signal de division (H) est fourni en sortie en tant que le signal d'estimation (Sls) lorsque le résultat de comparaison (Scomp) indique que la différence est inférieure à la valeur de seuil (TH) ;
un filtre de domaine temporel (14) couplé à l'estimateur de canal (13) et mettant en œuvre un filtrage de domaine temporel sur le signal d'estimation (Sls) ; et
un filtre de domaine fréquentiel (15) couplé au filtre de domaine temporel (14) et mettant en œuvre un filtrage de domaine fréquentiel sur le signal d'estimation (Sls) filtré par le filtre de domaine temporel (14), de manière à générer un résultat d'estimation de canal (CH) ;
dans lequel le résultat d'estimation de canal (CH) est transmis au premier égaliseur (130) et au circuit de récupération de signal (10), le premier égaliseur (130) génère le premier signal d'égalisation (Seq_1) selon le signal d'entrée (Sin) et le résultat d'estimation de canal (CH), et le circuit de récupération de signal (10) génère le signal de récupération (Sr) selon le signal d'entrée (Sin) et le résultat d'estimation de canal (CH) ;
dans lequel l'estimateur de canal (13) inclut en outre :
un registre (134) couplé au circuit de sortie (133) et stockant le signal d'estimation (Sls) fourni en sortie par le circuit de sortie (133) ;
dans lequel, lorsque le résultat de comparaison (Scomp) indique que la différence est supérieure ou égale à la valeur de seuil (TH), le circuit de sortie (133) fournit en sortie le signal d'estimation (Sls) stocké par le registre (134).

2. Circuit d'estimation de canal (1) selon la revendication 1, **caractérisé en ce que** le circuit d'estimation de canal (1) comprend en outre :
un multiplexeur de signal de transmission (11) couplé au circuit de récupération de signal (10) en vue de recevoir le signal de récupération (Sr) et une séquence connue, et de fournir en sortie l'un parmi le signal de récupération (Sr) et la séquence connue, en tant que le signal de transmission (Str) ;
dans lequel, lorsque le signal d'entrée (Sin) est un symbole d'apprentissage, le multiplexeur de signal de transmission (11) fournit en sortie la séquence connue, et lorsque le signal d'entrée (Sin) est un symbole de signal ou un symbole de données, le multiplexeur de signal de transmission (11) fournit en sortie le signal de récupération (Sr).

3. Circuit d'estimation de canal (1) selon la revendication 2, **caractérisé en ce que** le circuit d'estimation de canal (1) comprend en outre :
un multiplexeur d'entrée (17) ;
une ligne à retard (16) recevant et retardant le signal d'entrée (Sin), et fournissant en sortie le signal d'entrée retardé (Sin) au multiplexeur d'entrée (17) ;
un démultiplexeur d'entrée (12) recevant le signal d'entrée (Sin) et fournissant en sortie le signal d'entrée (Sin) à la ligne à retard (16) ou au multiplexeur d'entrée (17) ; et
dans lequel, lorsque le signal d'entrée (Sin) est un symbole d'apprentissage ou un symbole de signal, le démultiplexeur d'entrée (12) fournit en sortie le signal d'entrée (Sin) au multiplexeur d'entrée (17), et lorsque le signal d'entrée (Sin) est un symbole de données, le démultiplexeur d'entrée (12) fournit en sortie le signal d'entrée (Sin) à la ligne à retard (16) ;
dans lequel le multiplexeur d'entrée (17) reçoit le signal d'entrée (Sin) transmis soit par la ligne à retard (16), soit par le démultiplexeur d'entrée (12), et fournit en sortie le signal d'entrée (Sin) à partir de l'un parmi la ligne à retard (16) et le démultiplexeur d'entrée (12), à l'estimateur de canal (13).

4. Circuit d'estimation de canal (1) selon la revendication 1, **caractérisé en ce que** le circuit de récupération de signal (10) comprend :
un récepteur (100) incluant :
un second égaliseur (101) recevant le signal d'entrée (Sin) et le résultat d'estimation de canal (CH), et fournissant en sortie un second signal d'égalisation (Seq_2) ; un démappeur (102) couplé au second égaliseur (101) pour recevoir le second signal d'égalisation (Seq_2) et fournir en sortie un signal démappé (Sdm) ; et un décodeur (104) recevant le signal démappé (Sdm) et fournissant en sortie un contenu décodé (Sdc) ; et
un émetteur (107) incluant :
un codeur (105) recevant le contenu décodé (Sdc) et fournissant en sortie le contenu codé (Sec) ; un mappeur (108) recevant le contenu codé (Sec) et fournissant en sortie un signal mappé (Sm) ; et un multiplexeur de signal de récupération (109) recevant le signal mappé (Sm) et un signal pilote (Pilot), et fournissant en sortie le signal de récupération (Sr).

5. Circuit d'estimation de canal (1) selon la revendication 4, **caractérisé en ce que** le décodeur (104) inclut en outre :
un premier décodeur (1041) recevant le signal démappé (Sdm) et fournissant en sortie le premier contenu décodé (Sdc_1) ;
un désentrelaceur (1043) recevant le signal démappé (Sdm) et fournissant en sortie un signal désentrelacé (Sdi) ;
un second décodeur (1042) couplé au désentrelaceur (1043) en vue de recevoir le signal désentrelacé (Sdi) et de fournir en sortie un second contenu décodé (Sdc_2) ; et
un démultiplexeur de décodage (1040) couplé au démappeur (102) en vue de recevoir le signal démappé (Sdm) et de fournir en sortie le signal démappé (Sdm) au premier décodeur (1041) ou au désentrelaceur (1043) ; et
le codeur (105) inclut en outre :
un premier codeur (1050) recevant le premier contenu décodé (Sdc_1) et fournissant en sortie un premier contenu codé (Sec_1) ;
un second codeur (1051) recevant le second contenu décodé (Sdc_2) et fournissant en sortie un second contenu codé (Sec_2) ;
un entrelaceur (1052) recevant le second contenu codé (Sec_2) et fournissant en sortie un signal entrelacé (Sint) ; et
un multiplexeur de codage (1053) recevant le signal entrelacé (Sint) et le premier contenu codé (Sec_1), et fournissant en sortie l'un parmi le signal entrelacé (Sint) et le premier contenu codé (Sec_1) en tant que le contenu codé (Sec).

6. Procédé d'estimation de canal, **caractérisé en ce que** le procédé d'estimation de canal comprend les étapes ci-dessous consistant à :
recevoir un signal d'entrée (Sin) et générer un signal de récupération (Sr) sous la forme d'un signal de transmission (Str) correspondant au signal d'entrée (Sin), par le biais d'un circuit de récupération de signal (10) ;
recevoir le signal d'entrée (Sin) et le signal de transmission (Str) et fournir en sortie un signal de division (H), par le biais d'un diviseur (131) ;
recevoir le signal d'entrée (Sin) et fournir en sortie un premier signal d'égalisation (Seq_1), par le biais d'un premier égaliseur (130) ;
recevoir le premier signal d'égalisation (Seq_1) et le signal de transmission (Str) en vue de calculer une différence entre le premier signal d'égalisation (Seq_1) et le signal de transmission (Str), et comparer la différence à une valeur de seuil (TH) en vue de fournir en sortie un résultat de comparaison (Scomp), par le biais d'un comparateur (132) ;
recevoir le signal de division (H) et fournir en sortie un signal d'estimation (Sls) selon le résultat de comparaison (Scomp), par le biais d'un circuit de sortie (133), dans lequel le signal de division (H) est fourni en sortie en tant que le signal d'estimation (Sls) lorsque le résultat de comparaison (Scomp) indique que la différence est inférieure à la valeur de seuil (TH) ;
mettre en œuvre un filtrage de domaine temporel sur le signal d'estimation (Sls), par le biais d'un filtre de domaine temporel (14) ; et
mettre en œuvre un filtrage de domaine fréquentiel, par le biais d'un filtre de domaine fréquentiel (15), sur le signal d'estimation (Sls) filtré par le filtre de domaine temporel (14), de manière à générer un résultat d'estimation de canal (CH) ;
dans lequel le résultat d'estimation de canal (CH) est transmis au premier égaliseur (130) et au circuit de récupération de signal (10), le premier égaliseur (130) génère le premier signal d'égalisation (Seq_1) selon le signal d'entrée (Sin) et le résultat d'estimation de canal (CH), et le circuit de récupération de signal (10) génère le signal de récupération (Sr) selon le signal d'entrée (Sin) et le résultat d'estimation de canal (CH) ;
dans lequel le procédé d'estimation de canal comprend en outre l'étape ci-dessous consistant à :
stocker le signal d'estimation (Sls) fourni en sortie à partir du circuit de sortie (133), par le biais d'un registre (134) ;
dans lequel, lorsque le résultat de comparaison (Scomp) indique que la différence est supérieure ou égale à la valeur de seuil (TH), le circuit de sortie (133) fournit en sortie le signal d'estimation (Sls) stocké dans le registre (134), ou fournit en sortie le signal d'estimation (Sls) de 0.

7. Procédé d'estimation de canal selon la revendication 6, **caractérisé en ce que** le procédé d'estimation de canal comprend en outre l'étape ci-dessous consistant à :
recevoir le signal de récupération (Sr) et une séquence connue, et fournir en sortie l'un parmi le signal de récupération (Sr) et la séquence connue, en tant que le signal de transmission (Str), par le biais d'un multiplexeur de signal de transmission (11) ;
dans lequel, lorsque le signal d'entrée (Sin) est un symbole d'apprentissage, le multiplexeur de signal de transmission (11) fournit en sortie la séquence connue, et lorsque le signal d'entrée (Sin) est un symbole de signal ou un symbole de données, le multiplexeur de signal de transmission (11) fournit en sortie le signal de récupération (Sr).

8. Procédé d'estimation de canal selon la revendication 6, **caractérisé en ce que** le procédé d'estimation de canal comprend en outre les étapes ci-dessous consistant à :
recevoir le signal d'entrée (Sin) et fournir en sortie le signal d'entrée (Sin) à une ligne à retard (16) ou à un multiplexeur d'entrée (17), par le biais d'un démultiplexeur d'entrée (12) ; et
recevoir le signal d'entrée (Sin) transmis soit par le démultiplexeur d'entrée (12), soit par la ligne à retard (16), et fournir en sortie le signal d'entrée (Sin) à partir de l'un parmi le démultiplexeur d'entrée (12) et la ligne à retard (16), à l'estimateur de canal (13), par le biais du multiplexeur d'entrée (17) ;
dans lequel, lorsque le signal d'entrée (Sin) est un symbole d'apprentissage ou un symbole de signal, le démultiplexeur d'entrée (12) fournit en sortie le signal d'entrée (Sin) au multiplexeur d'entrée (17), et lorsque le signal d'entrée (Sin) est un symbole de données, le démultiplexeur d'entrée (12) fournit en sortie le signal d'entrée (Sin) à la ligne à retard (16), et fournit en sortie le signal d'entrée (Sin) retardé au multiplexeur d'entrée (17).

9. Procédé d'estimation de canal selon la revendication 6, **caractérisé en ce que** l'étape de réception du signal d'entrée (Sin) et de génération du signal de récupération (Sr) sous la forme d'un signal de transmission (Str) correspondant au signal d'entrée (Sin) comprend les étapes ci-dessous consistant à :
recevoir le signal d'entrée (Sin) et le résultat d'estimation de canal (CH), et fournir en sortie un second signal d'égalisation (Seq_2), par le biais d'un second égaliseur (101) ;
recevoir le second signal d'égalisation (Seq_2), et fournir en sortie un signal démappé (Sdm), par le biais d'un démappeur (102) ;
recevoir le signal démappé (Sdm), et fournir en sortie un contenu décodé (Sdc), par le biais d'un décodeur (104) ;
recevoir le contenu décodé (Sdc), et fournir en sortie le contenu codé (Sec), par le biais d'un codeur (105) ;
recevoir le contenu codé (Sec), et fournir en sortie un signal mappé (Sm), par le biais d'un mappeur (108) ; et
recevoir le signal mappé (Sm) et un signal pilote (Pilot), et fournir en sortie le signal de récupération (Sr), par le biais d'un multiplexeur de signal de récupération (109).

10. Procédé d'estimation de canal selon la revendication 9, **caractérisé en ce que** l'étape de réception du signal démappé (Sdm) et de fourniture en sortie du contenu décodé (Sdc) comprend les étapes ci-dessous consistant à :
recevoir le signal démappé (Sdm), et fournir en sortie le signal démappé (Sdm) à un premier décodeur (1041) ou à un désentrelaceur (1043), par le biais d'un démultiplexeur de décodage (1040) ;
recevoir le signal démappé (Sdm), et fournir en sortie le premier contenu décodé (Sdc_1), par le biais d'un premier décodeur (1041) ;
recevoir le signal démappé (Sdm), et fournir en sortie un signal désentrelacé (Sdi), par le biais du désentrelaceur (1043) ;
recevoir le signal désentrelacé (Sdi), et fournir en sortie un second contenu décodé (Sdc_2), par le biais d'un second décodeur (1042) ;
recevoir le premier contenu décodé (Sdc_1), et fournir en sortie le premier contenu codé (Sec_1), par le biais d'un premier codeur (1050) ;
recevoir le second contenu décodé (Sdc_2), et fournir en sortie le second contenu codé (Sec_2), par le biais d'un second codeur (1051) ;
recevoir le second contenu codé (Sec_2), et fournir en sortie un signal entrelacé (Sint), par le biais d'un entrelaceur (1052) ; et
recevoir le signal entrelacé (Sint) et le premier contenu codé (Sec_1), et fournir en sortie l'un parmi le signal entrelacé (Sint) et le premier contenu codé (Sec_1), en tant que le contenu codé (Sec), par le biais d'un multiplexeur de codage (1053).

11. Circuit d'estimation de canal (1), **caractérisé en ce que** le circuit d'estimation de canal (1) comprend :
un circuit de récupération de signal (10) recevant un signal d'entrée (Sin) et générant un signal de récupération (Sr) sous la forme d'un signal de transmission (Str) correspondant au signal d'entrée (Sin) ;
un estimateur de canal (13) couplé au circuit de récupération de signal (10) et incluant :
un diviseur (131) recevant le signal d'entrée (Sin) et le signal de transmission (Str), et fournissant en sortie un signal de division (H) ;
un premier égaliseur (130) recevant le signal d'entrée (Sin) et fournissant en sortie un premier signal d'égalisation (Seq_1) ;
un comparateur (132) recevant le premier signal d'égalisation (Seq_1) et le signal de transmission (Str) en vue de calculer une différence entre le premier signal d'égalisation (Seq_1) et le signal de transmission (Str), et de comparer la différence à une valeur de seuil (TH) en vue de fournir en sortie un résultat de comparaison (Scomp) ; et
un circuit de sortie (133) recevant le signal de division (H) et fournissant en sortie un signal d'estimation (Sls) selon le résultat de comparaison (Scomp), dans lequel le signal de division (H) est fourni en sortie en tant que le signal d'estimation (Sls) lorsque le résultat de comparaison (Scomp) indique que la différence est inférieure à la valeur de seuil (TH) ;
un filtre de domaine temporel (14) couplé à l'estimateur de canal (13) et mettant en œuvre un filtrage de domaine temporel sur le signal d'estimation (Sls) ; et
un filtre de domaine fréquentiel (15) couplé au filtre de domaine temporel (14) et mettant en œuvre un filtrage de domaine fréquentiel sur le signal d'estimation (Sls) filtré par le filtre de domaine temporel (14), de manière à générer un résultat d'estimation de canal (CH) ;
dans lequel le résultat d'estimation de canal (CH) est transmis au premier égaliseur (130) et au circuit de récupération de signal (10), le premier égaliseur (130) génère le premier signal d'égalisation (Seq_1) selon le signal d'entrée (Sin) et le résultat d'estimation de canal (CH), et le circuit de récupération de signal (10) génère le signal de récupération (Sr) selon le signal d'entrée (Sin) et le résultat d'estimation de canal (CH) ;
dans lequel, lorsque le résultat de comparaison (Scomp) indique que la différence est supérieure ou égale à la valeur de seuil (TH), le circuit de sortie (133) fournit en sortie le signal d'estimation (Sls) de 0.
